# FASCICULE DE BREVET EUROPEEN

(11) **EP 0 804 871 B1**
(45) Date de publication et mention de la délivrance du brevet: **27.02.2002**
(21) Numéro de dépôt: 97440041.8
(22) Date de dépôt: 28.04.1997
(51) Int. Cl.: A01D 34/66

(54) **Machine de coupe**
Mähmaschine
Cutting machine

(30) Priorité: 02.05.1996 FR 9605660
(43) Date de publication de la demande: 05.11.1997
(73) Titulaire: KUHN S.A., 67700 Saverne (FR)
(72) Inventeur: Neuerburg, Horst, 67700 Saverne (FR); Lacroix, Jean-Paul, 67670 Mommenheim (FR)

(56) Documents cités:
- EP-A- 0 556 143
- DE-A- 4 110 430
- DE-U- 9 112 331
- FR-A- 2 357 163
- FR-A- 2 687 039
- GB-A- 2 157 936

## Description

La présente invention concerne une machine de coupe comportant :
- un mécanisme de coupe ;
- une structure d'attelage destinée à être liée au dispositif d'attelage d'un véhicule moteur ;
- une poutre porteuse liée d'une part à la structure d'attelage au moyen d'une première articulation et d'autre part au mécanisme de coupe au moyen d'une deuxième articulation ;
- un dispositif d'allégement comportant un élément élastiquement déformable lié d'une part à la structure d'attelage au moyen d'une troisième articulation et d'autre part au mécanisme de coupe au moyen d'une quatrième articulation ;
- un dispositif de verrouillage destiné en position de transport :
   - à verrouiller le pivotement de la structure d'attelage par rapport à la poutre porteuse autour de l'axe longitudinal de la première articulation ;
   - à verrouiller le pivotement du mécanisme de coupe par rapport à la poutre porteuse autour de l'axe longitudinal de la deuxième articulation.

Une telle machine de coupe est connue par le document FR-A-2 687 039.

Cette machine de coupe comporte une poutre porteuse liée d'une part à une structure d'attelage au moyen d'une première articulation et d'autre part à un mécanisme de coupe au moyen d'une deuxième articulation. La structure d'attelage est destinée à être liée à un véhicule moteur au moyen de deux points d'attelage inférieurs et d'un point d'attelage supérieur. La machine de coupe comporte également un dispositif d'allégement destiné à alléger, en position de travail, le mécanisme de coupe.

Ce dispositif d'allégement est doté d'un élément élastique lié d'une part à la structure d'attelage au moyen d'une troisième articulation et d'autre part au mécanisme de coupe au moyen d'une quatrième articulation.

Cette machine de coupe est encore équipée d'un dispositif de verrouillage permettant de verrouiller, en position de transport, le pivotement de la structure d'attelage par rapport à la poutre porteuse et le pivotement du mécanisme de coupe par rapport à ladite poutre porteuse et, en position de dépose, d'annuler lesdits verrouillages. A cet effet, le dispositif de verrouillage comporte un limiteur lié d'une part à la structure d'attelage et d'autre part à la poutre porteuse de manière coulissante.

Le limiteur est muni, à l'extrémité où il est lié à la poutre porteuse, d'un tourillon guidé dans des trous oblongs prévus sur ladite poutre porteuse. Il est encore prévu un crochet lié d'une part au tourillon et destiné d'autre part à s'accrocher, en position de transport, à un organe d'accrochage solidaire du mécanisme de coupe.

Pour déposer cette machine de coupe connue, il est prévu une béquille destinée, en position de dépose, à soutenir la poutre porteuse et la structure d'attelage. A cet effet, la béquille est liée à la poutre porteuse et est commandée, lorsque cela est souhaité, au moyen d'un dispositif de commande, de sorte que, lorsque ce dernier est actionné, ladite béquille est mise en position de dépose et l'action du dispositif d'allégement est annulée.

Le but de la présente invention est de simplifier les moyens permettant de déposer la machine de coupe tout en garantissant un attelage aisé de ladite machine de coupe au véhicule moteur.

A cet effet, il est prévu sur la machine de coupe selon l'invention que, en position de dépose, la structure d'attelage et la poutre porteuse soient maintenues en position au moyen de l'élément élastiquement déformable du dispositif d'allégement et que le dispositif de verrouillage condamne dans au moins un sens :
- le pivotement de la structure d'attelage par rapport à la poutre porteuse autour de l'axe longitudinal de la première articulation, et
- le pivotement de la poutre porteuse par rapport au mécanisme de coupe autour de l'axe longitudinal de la deuxième articulation.

Une telle machine de coupe est facile à déposer et à atteler à un véhicule moteur. On remarquera qu'une telle machine de coupe ne comporte pas de béquille devant être mise en place pour la dépose de ladite machine de coupe.

L'invention concerne également les caractéristiques suivantes considérées isolément ou dans toutes leurs combinaisons techniquement possibles :
- le dispositif de verrouillage comporte un limiteur destiné à limiter le pivotement de la structure d'attelage par rapport à la poutre porteuse autour de l'axe longitudinal de la première articulation ;
- le limiteur est lié, à l'une de ses extrémités, à la structure d'attelage au moyen d'une septième articulation et, à l'autre de ses extrémités, à la poutre porteuse de manière coulissante au moyen d'une liaison comportant un tourillon d'axe longitudinal au moins sensiblement parallèle à l'axe longitudinal de la première articulation, lequel tourillon est guidé dans au moins un trou oblong implanté au moins sensiblement dans le voisinage de la partie médiane de ladite poutre porteuse ;
- il est prévu deux trous oblongs dans lesquels sont guidées les extrémités du tourillon et l'axe longitudinal de chaque trou oblong s'étend au moins sensiblement orthogonalement à l'axe longitudinal de la première articulation ;
- le dispositif de verrouillage comporte un verrou destiné à verrouiller simultanément le pivotement de la structure d'attelage par rapport à la poutre porteuse autour de l'axe longitudinal de la première articulation et le pivotement de la poutre porteuse par rapport au mécanisme de coupe autour de l'axe longitudinal de la deuxième articulation ; un tel verrou permet, d'un seul coup de main, de mettre la machine de coupe dans une position de dépose en vue de sa dépose ;
- le verrou comporte un levier lié, à l'une de ses extrémités, au limiteur au moyen d'une huitième articulation d'axe longitudinal confondu avec l'axe longitudinal du tourillon ;
- le levier comporte une première surface d'appui à son autre extrémité et une deuxième surface d'appui située entre cette première surface d'appui et la huitième articulation ;
- en position de dépose, la première surface d'appui du levier est en appui sur le mécanisme de coupe ; ce faisant, le pivotement de la poutre porteuse vers le haut, c'est-à-dire dans le sens de marche des aiguilles d'une montre, autour de l'axe longitudinal de la deuxième articulation, est condamné;
- en position de dépose, la deuxième surface d'appui du levier est en appui sur une butée prévue sur la poutre porteuse ; ce faisant, le pivotement de la structure d'attelage en direction du mécanisme de coupe, c'est-à-dire dans le sens de marche des aiguilles d'une montre, autour de l'axe longitudinal de la première articulation, est condamné ;
- ladite butée prévue sur la poutre porteuse est située entre les deux trous oblongs dans lesquels est guidé le tourillon ;
- en position de dépose, pour régler la position de la structure d'attelage, il est prévu que :
   - le limiteur soit de longueur réglable et/ou ;
   - le levier soit de longueur réglable et/ou ;
   - la deuxième surface d'appui soit réglable et/ou ;
   - la butée soit réglable.
- dans une position autre que celle de dépose, le levier est escamoté de manière à autoriser d'une part le pivotement de la poutre porteuse par rapport à la structure d'attelage autour de l'axe longitudinal de la première articulation et d'autre part le pivotement du mécanisme de coupe par rapport à la poutre porteuse autour de l'axe longitudinal de la deuxième articulation ;
- dans une position autre que celle de dépose, le levier est escamoté de manière que son axe longitudinal soit sensiblement confondu avec l'axe longitudinal du limiteur ;
- la structure d'attelage comporte deux points d'attelage inférieurs et, en position de dépose, le point d'attelage inférieur le plus éloigné du mécanisme de coupe est situé plus bas que le point d'attelage inférieur le plus proche dudit mécanisme de coupe de manière à faciliter l'attelage de la machine de coupe au véhicule moteur.

D'autres objets, caractéristiques et avantages de l'invention apparaissent dans la description suivante avec référence aux dessins annexés qui représentent, à titre d'exemple non limitatif, une forme de réalisation de la machine de coupe selon l'invention.

Sur ces dessins :
- la figure 1 représente une vue arrière d'une machine de coupe selon l'invention liée à un véhicule moteur et se trouvant dans une de ses positions de travail ;
- la figure 2 est une vue arrière de la machine de coupe de la figure 1 se trouvant dans la position de dépose ;
- la figure 3 est une vue de dessus de la machine de coupe de la figure 2 ;
- la figure 4 représente schématiquement la machine de coupe de la figure 2.

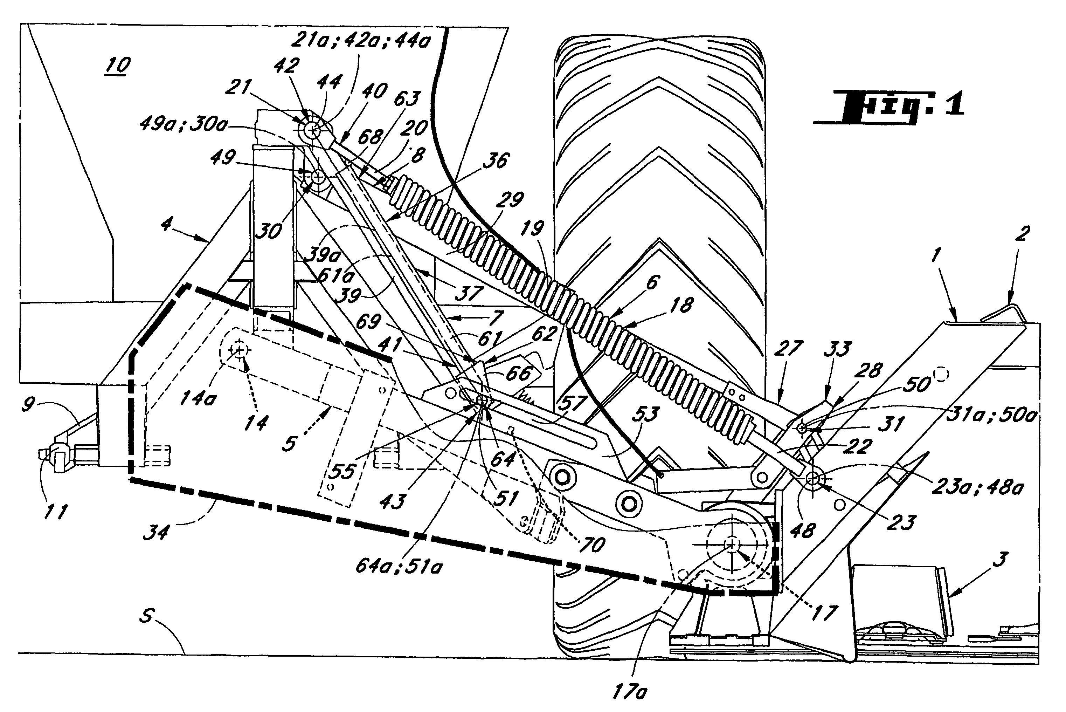

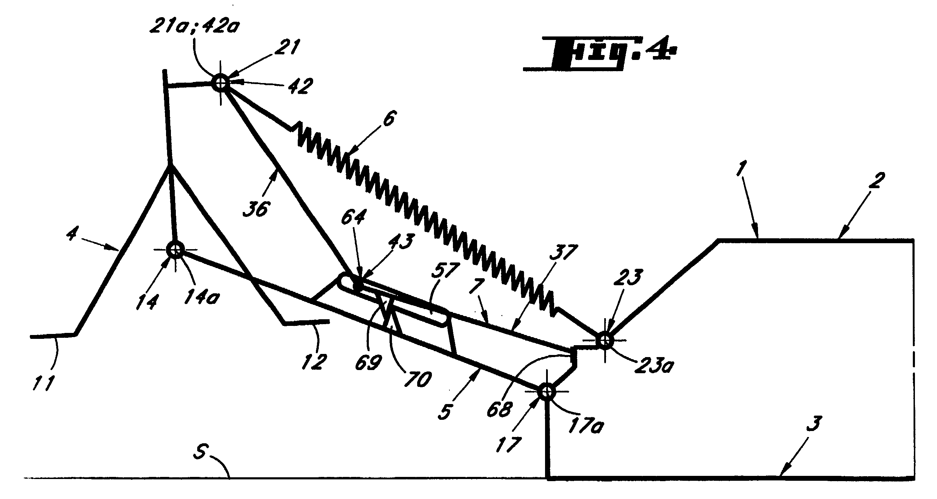

La machine de coupe (1) représentée sur les figures 1 à 4 est une faucheuse (2) comportant dans les grandes lignes un mécanisme de coupe (3), une structure d'attelage (4), une poutre porteuse (5), un dispositif d'allégement (6), un dispositif de verrouillage (7) et un dispositif de manoeuvre (8).

La structure d'attelage (4) est destinée à être liée à un dispositif d'attelage (9) d'un véhicule moteur (10) au moyen de deux points d'attelage inférieurs (11, 12) et un point d'attelage supérieur (13) lesquels font partie de ladite structure d'attelage (4).

Selon l'exemple représenté, le mécanisme de coupe (3) s'étend, vue de l'arrière suivant la direction d'avance au travail (15) (figure 1), à droite du véhicule moteur (10).

La poutre porteuse (5) est liée d'une part à la structure d'attelage (4) au moyen d'une première articulation (14) d'axe longitudinal (14a) au moins sensiblement horizontal et dirigé suivant la direction d'avance (15), et d'autre part au mécanisme de coupe (3) au moyen d'une deuxième articulation (17) d'axe longitudinal (17a) au moins sensiblement parallèle audit axe longitudinal (14a). En position de travail, la poutre porteuse (5) s'étend transversalement à la direction d'avance (15).

Le dispositif d'allégement (6) est destiné à alléger, en position de travail, le mécanisme de coupe (3) et, en position de dépose, à contribuer au maintien de la structure d'attelage (4) dans une position de dépose optimale permettant à nouveau d'atteler aisément la faucheuse (2) au véhicule moteur (10).

A cet effet, le dispositif d'allégement (6) comporte un élément élastiquement déformable (18) qui est, selon l'exemple représenté, un ressort de traction (19). Ce ressort de traction (19) est lié à l'une de ses extrémités à un tirant supérieur (20) lui-même lié à la structure d'attelage (4) au moyen d'une troisième articulation (21) d'axe longitudinal (21a) au moins sensiblement parallèle à l'axe longitudinal (14a) de la première articulation (14). A l'autre de ses extrémités, le ressort de traction (19) est lié à un tirant inférieur (22) lui-même lié au mécanisme de coupe (3) au moyen d'une quatrième articulation (23) d'axe longitudinal (23a) au moins sensiblement parallèle à l'axe longitudinal (14a) de la première articulation (14).

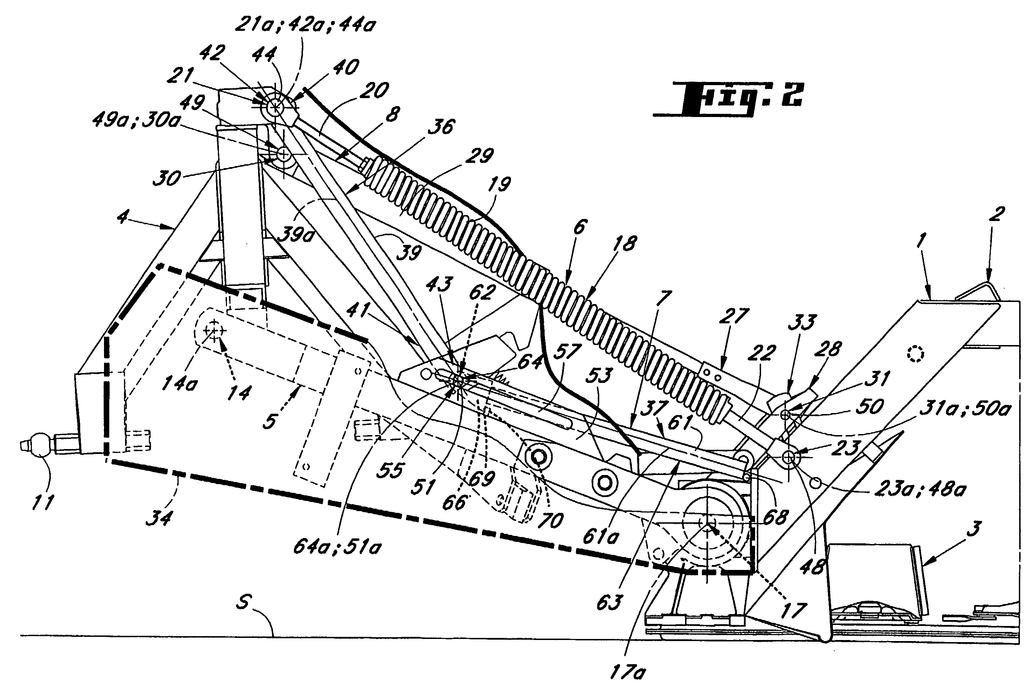

Le dispositif de manoeuvre (8) permet d'amener le mécanisme de coupe (3) dans :
- une position de travail où ledit mécanisme de coupe (3) s'étend d'une part sensiblement orthogonalement à la direction d'avance (15) et d'autre part sensiblement horizontalement (position de travail dite normale (figure 1)) ou vers le bas ou vers le haut (positions de travail dites particulières) ;
- une position andain où ledit mécanisme de coupe (3) s'étend au-dessus du produit coupé ou à couper ;
- une position de transport où ledit mécanisme de coupe (3) s'étend sensiblement verticalement vers le haut ; et
- une position de dépose (figures 2 à 4) dans laquelle ledit mécanisme de coupe (3) repose longitudinalement sur le sol (S).

Ce dispositif de manoeuvre (8) comporte un élément de manoeuvre (27) et un organe de manoeuvre (28). Selon l'exemple représenté, l'élément de manoeuvre (27) est un vérin hydraulique (29) simple effet lié à l'une de ses extrémités à la structure d'attelage (4) au moyen d'une cinquième articulation (30) d'axe longitudinal (30a) et à l'autre de ses extrémités à l'organe de manoeuvre (28) au moyen d'une sixième articulation (31) d'axe longitudinal (31a) au moins sensiblement parallèle audit axe longitudinal (30a). Selon l'exemple représenté l'organe de manoeuvre (28) comporte un mécanisme à trois leviers (33) décrit dans la demande de brevet français **96 05051** déposée le **17 Avril 1996** par la demanderesse. Cet organe de manoeuvre (28) ne sera pas décrit davantage. Pour de plus amples détails, on se reportera, en cas de besoin, au texte de ladite demande de brevet.

La faucheuse (2) comporte en sus un dispositif de transmission (34) (représenté schématiquement en traits mixtes) destiné à transmettre le mouvement de rotation d'une prise de puissance (non représentée) du véhicule moteur (10) au mécanisme de coupe (3) à l'aide d'un arbre de transmission (35) à joints universels.

Le dispositif de verrouillage (7) quant à lui, comporte dans les grandes lignes un limiteur (36) et un verrou (37). Le limiteur (36) est destiné à limiter le pivotement de la structure d'attelage (4) par rapport à la poutre porteuse (5) autour de l'axe longitudinal (14a) de la première articulation (14). Le verrou (37) est destiné à verrouiller simultanément ledit pivotement de la structure d'attelage (4) par rapport à la poutre porteuse (5) et le pivotement de ladite poutre porteuse (5) par rapport au mécanisme de coupe (3) autour de l'axe longitudinal (17a) de la deuxième articulation (17).

Le limiteur (36) comporte une barre rigide (39) s'étendant, en position de travail comme en position de dépose, à partir de la structure d'attelage (4) vers le bas en direction du mécanisme de coupe (3).

A cet effet, la barre rigide (39) est liée à l'une (40) de ses extrémités (40, 41) à la structure d'attelage (4) au moyen d'une septième articulation (42) d'axe longitudinal (42a) confondu avec l'axe longitudinal (21a) de la troisième articulation (21) et à l'autre (41) de ses extrémités (40, 41) à la poutre porteuse (5) de manière coulissante au moyen d'une liaison (43).

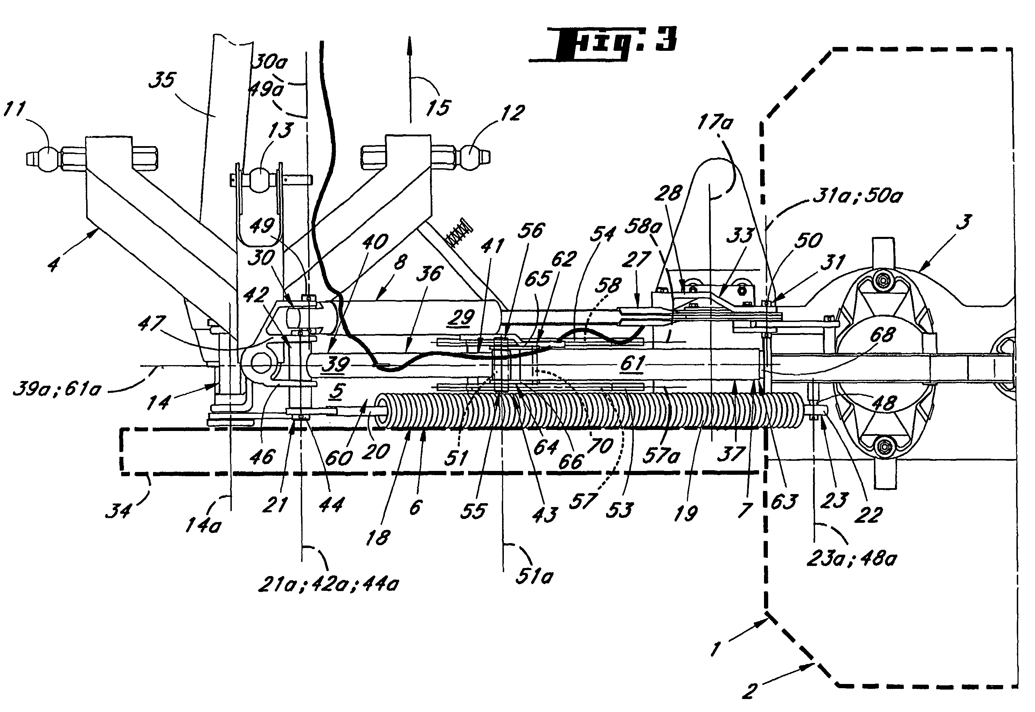

On remarquera que les articulations (21, 42) comportent, selon l'exemple représenté, un tourillon commun (44) d'axe longitudinal (44a) confondu avec les axes longitudinaux (21a, 42a). Ce tourillon commun (44) s'étend de part en part au travers du tirant supérieur (20) de l'élément élastiquement déformable (18), au travers de l'extrémité (40) de la barre rigide (39) et au travers de deux ailes (46, 47) de la structure d'attelage (4), tel que représenté sur la figure 3.

On notera également que, selon l'exemple représenté, les articulations (23, 30, 31) comportent chacune un tourillon (48, 49, 50) respectif, d'axe longitudinal (48a, 49a, 50a) respectif, confondu avec l'axe longitudinal (23a, 30a, 31a) correspondant desdites articulations (23, 30, 31).

La liaison (43), quant à elle, comporte également un tourillon (51) d'axe longitudinal (51a) au moins sensiblement parallèle à l'axe longitudinal (14a) de la première articulation (14) et deux ailes (53, 54) solidaires de la poutre porteuse (5). Les extrémités (55, 56) du tourillon (51) sont chacune guidées dans un trou oblong (57, 58) respectif prévu dans l'aile (53, 54) correspondante. Chaque aile (53, 54) est implantée dans le voisinage de la partie médiane (60) de la poutre porteuse (5) de manière que l'axe longitudinal (57a, 58a) du trou oblong (57, 58) correspondant s'étende au moins sensiblement orthogonalement à l'axe longitudinal (14a) de la première articulation (14) et qu'il subsiste un espace entre les deux ailes (53, 54) supportant lesdits trous oblongs (57, 58).

Le verrou (37), quant à lui, comporte un levier (61) s'étendant d'une part, en position de dépose, sensiblement parallèlement à la poutre porteuse (5) et étant lié d'autre part, à l'une (62) de ses extrémités (62, 63), à la barre rigide (39) du limiteur (36) au moyen d'une huitième articulation (64) d'axe longitudinal (64a) confondu avec l'axe longitudinal (51a) du tourillon (51).

A cet effet, l'autre extrémité (41) de la barre rigide (39) et l'extrémité (62) du levier (61) s'étendent dans l'espace prévu entre les deux ailes (53, 54) de la liaison (43), de sorte que le tourillon (51) s'étende de part en part au travers :
- de ladite autre extrémité (41) de la barre rigide (39),
- de deux ailes (65, 66) prévues à ladite extrémité (62) dudit levier (61), et
- des trous oblongs (57, 58) desdites ailes (53, 54) tel que représenté sur la figure 3.

A l'autre extrémité (63) du levier (61) est prévue une première surface d'appui (68) venant en appui sur le mécanisme de coupe (3) en position de dépose de manière à condamner le pivotement, vers le haut, de la poutre porteuse (5) autour de l'axe longitudinal (17a) de la deuxième articulation (17).

En position de dépose, la poutre porteuse (5) s'étend vers le haut. Entre les deux extrémités (62, 63) du levier (61) est prévue une deuxième surface d'appui (69). Cette deuxième surface d'appui (69) est destinée à venir, en position de dépose, en appui sur une butée (70) prévue entre les deux ailes (53, 54) de la liaison (43) de manière à condamner le pivotement de la structure d'attelage (4) dans la direction du mécanisme de coupe (3) (c'est-à-dire dans le sens de marche des aiguilles d'une montre) autour de l'axe longitudinal (14a) de la première articulation (14).

La deuxième surface d'appui (69) est, selon l'exemple représenté, située sur les deux ailes (65, 66) du levier (61), tandis que la butée (70) est fixée sur la poutre porteuse (5) entre les deux ailes (53, 54) de la liaison (43).

A la lumière de la figure 2, on voit en sus que la barre rigide (39) du limiteur (36), le levier (61) du verrou (37), la deuxième surface d'appui (69) dudit levier (61) et la butée (70) sont agencés de manière que, en position de dépose, le point d'attelage inférieur (11) de la structure d'attelage (4) le plus éloigné du mécanisme de coupe (3) soit situé plus bas que le point d'attelage inférieur (12) le plus proche dudit mécanisme de coupe (3) afin de faciliter l'attelage de la faucheuse (2) au véhicule moteur (10).

En position de dépose, la faucheuse (2) repose sur le sol (S) au moyen du mécanisme de coupe (3), et la structure d'attelage (4) et la poutre porteuse (5) sont notamment maintenues dans leur position de dépose telle que représentée sur les figures 2, 3 et 4 au moyen du ressort de traction (19) et au moyen du dispositif de verrouillage (7).

Lorsque l'opérateur souhaite atteler la faucheuse (2) au véhicule moteur (10), il lie la structure d'attelage (4) au dispositif d'attelage (9) du véhicule moteur (10) au moyen des deux points d'attelage inférieurs (11, 12) et du point d'attelage supérieur (13). Pour ce faire, il est préférable de lier d'abord le point d'attelage inférieur (11) le plus bas au dispositif d'attelage (9). Ensuite l'opérateur soulève quelque peu ce dernier. Les pivotements autour des axes longitudinaux (14a, 17a) des articulations (14, 17) étant condamnés, la faucheuse (2) pivote quelque peu autour de l'extrémité du mécanisme de coupe (3) la plus éloignée de la structure d'attelage (4), ce qui a pour effet de rapprocher le point d'attelage inférieur (12) du dispositif d'attelage (9) permettant de le lier aisément à ce dernier. Ensuite, l'opérateur lie le point d'attelage supérieur (13) au dispositif d'attelage (9).

Après avoir lié les trois points d'attelage (11, 12, 13) de la structure d'attelage (4) au dispositif d'attelage (9) du véhicule moteur (10), l'opérateur soulève davantage ledit dispositif d'attelage (9) de manière à faire pivoter le mécanisme de coupe (3) vers le bas autour de l'axe longitudinal (17a) de la deuxième articulation (17) pour dégager ledit mécanisme de coupe (3) de la première surface d'appui (68) (si cela est nécessaire).

Une fois le levier (61) libéré, l'opérateur escamote ledit levier (61) de sorte à libérer la première et la deuxième articulation (14, 17) pour autoriser le pivotement de la structure d'attelage (4) par rapport à la poutre porteuse (5) autour de l'axe longitudinal (14a) et le pivotement du mécanisme de coupe (3) par rapport à ladite poutre porteuse (5) autour de l'axe longitudinal (17a). Pour ce faire, l'opérateur pivote le levier (61) vers le haut autour de l'axe longitudinal (64a) de la huitième articulation (64) jusque dans une position escamotée dans laquelle l'axe longitudinal (61a) dudit levier (61) soit sensiblement confondu avec l'axe longitudinal (39a) de la barre rigide (39) du limiteur (36).

La faucheuse (2) étant attelée au véhicule moteur (10) et, après que l'opérateur ait abaissé le dispositif d'attelage (9) dudit véhicule moteur (10), elle est alors dans la position de travail telle que représentée sur la figure 1.

Pour mettre la faucheuse (2) de la position de travail dans la position de dépose, l'opérateur effectuera les différentes opérations en sens inverse.

On notera que le levier (61) occupe sa position escamotée dans la position de travail, dans la position andain ainsi que dans la position transport.

La mise en position andain et en position de transport de la faucheuse (2), ainsi que dans la position de travail à partir desdites positions andain et de transport de la faucheuse (2), s'effectue d'une manière semblable à celle décrite dans la demande de brevet français **96 05051** déposée le **17 Avril 1996**. Ces différentes mises en position de la faucheuse (2) ne seront pas décrites davantage. Pour de plus amples détails, on se reportera en cas de besoin, au texte de ladite demande de brevet.

Finalement, différentes modifications restent possibles, notamment en ce qui concerne la constitution des divers éléments ou par substitution d'équivalents techniques, sans pour autant sortir du domaine de protection défini par les revendications.

Ainsi, il est parfaitement possible de prévoir que la barre rigide (39) du limiteur (36) et/ou le levier (61) du verrou (37) soit (soient) de longueur réglable, et/ou que la deuxième surface d'appui (69) dudit levier (61) et/ou que la butée (70) soit (soient) réglable(s).

Il est également parfaitement imaginable que le mécanisme de coupe (3) de la faucheuse (2) soit agencé, vue de l'arrière suivant la direction d'avance (15), à gauche du véhicule moteur (10). Dans ce cas de figure, les différents sens de pivotement concernés décrits précédemment seraient bien entendu inversés.

## Revendications

1. Machine de coupe comportant :
- un mécanisme de coupe (3) ;
- une structure d'attelage (4) destinée à être liée au dispositif d'attelage (9) d'un véhicule moteur (10) ;
- une poutre porteuse (5) liée d'une part à la structure d'attelage (4) au moyen d'une première articulation (14) et d'autre part au mécanisme de coupe (3) au moyen d'une deuxième articulation (17) ;
- un dispositif d'allégement (6) comportant un élément élastiquement déformable (18) lié d'une part à la structure d'attelage (4) au moyen d'une troisième articulation (21) et d'autre part au mécanisme de coupe (3) au moyen d'une quatrième articulation (23) ;
- un dispositif de verrouillage (7) destiné en position de transport :
• à verrouiller le pivotement de la structure d'attelage (4) par rapport à la poutre porteuse (5) autour de l'axe longitudinal (14a) de la première articulation (14),
• à verrouiller le pivotement du mécanisme de coupe (3) par rapport à la poutre porteuse (5) autour de l'axe longitudinal (17a) de la deuxième articulation (17),
***caractérisée en ce* que**, en position de dépose, la structure d'attelage (4) et la poutre porteuse (5) sont maintenues en position au moyen de l'élément élastiquement déformable (18) du dispositif d'allégement (6) et que le dispositif de verrouillage (7) condamne dans au moins un sens :
• le pivotement de la structure d'attelage (4) par rapport à la poutre porteuse (5) autour de l'axe longitudinal (14a) de la première articulation (14), et
• le pivotement de la poutre porteuse (5) par rapport au mécanisme de coupe (3) autour de l'axe longitudinal (17a) de la deuxième articulation (17).

2. Machine de coupe selon la revendication 1, ***caractérisée en ce* que** le dispositif de verrouillage (7) comporte un limiteur (36) destiné à limiter le pivotement de la structure d'attelage (4) par rapport à la poutre porteuse (5) autour de l'axe longitudinal (14a) de la première articulation (14).

3. Machine de coupe selon la revendication 2, ***caractérisée en ce* que** ledit limiteur (36) est lié, à l'une de ses extrémités (40, 41), à la structure d'attelage (4) au moyen d'une septième articulation (42) et, à l'autre de ses extrémités (40, 41) à la poutre porteuse (5) de manière coulissante au moyen d'une liaison (43) comportant un tourillon (51) d'axe longitudinal (5 1a) au moins sensiblement parallèle à l'axe longitudinal (14a) de la première articulation (14), lequel tourillon (51) est guidé dans au moins un trou oblong (57, 58) implanté au moins sensiblement dans le voisinage de la partie médiane (60) de ladite poutre porteuse (5).

4. Machine de coupe selon la revendication 3, ***caractérisée en ce* qu'**il est prévu deux trous oblongs (57, 58) dans lesquels sont guidées les extrémités (55, 56) du tourillon (51), et que l'axe longitudinal (57a, 58a) de chaque trou oblong (57, 58) s'étend au moins sensiblement orthogonalement à l'axe longitudinal (14a) de la première articulation (14).

5. Machine de coupe selon la revendication 3 ou 4, ***caractérisée en ce* que** le dispositif de verrouillage (7) comporte un verrou (37) destiné à verrouiller simultanément le pivotement de la structure d'attelage (4) par rapport à la poutre porteuse (5) autour de l'axe longitudinal (14a) de la première articulation (14) et le pivotement de la poutre porteuse (5) par rapport au mécanisme de coupe (3) autour de l'axe longitudinal (17a) de la deuxième articulation (17).

6. Machine de coupe selon la revendication 5, ***caractérisée en ce* que** le verrou (37) comporte un levier (61) lié, à l'une de ses extrémités (62, 63), au limiteur (36) au moyen d'une huitième articulation (64) d'axe longitudinal (64a) confondu avec l'axe longitudinal (51a) du tourillon (51).

7. Machine de coupe selon la revendication 6, ***caractérisée en ce* que** le levier (61) comporte une première surface d'appui (68) à son autre extrémité (63) et une deuxième surface d'appui (69) située entre cette première surface d'appui (68) et la huitième articulation (64).

8. Machine de coupe selon la revendication 7, ***caractérisée en ce* que**, en position de dépose, la première surface d'appui (68) du levier (61) est en appui sur le mécanisme de coupe (3).

9. Machine de coupe selon la revendication 7 ou 8, ***caractérisée en ce* que**, en position de dépose, la deuxième surface d'appui (69) du levier (61) est en appui sur une butée (70) prévue sur la poutre porteuse (5).

10. Machine de coupe selon la revendication 9, ***caractérisée en ce* que** ladite butée (70) prévue sur la poutre porteuse (5) est située entre les deux trous oblongs (57, 58) dans lesquels est guidé le tourillon (51).

11. Machine de coupe selon la revendication 10, ***caractérisée en ce* que** :
- le limiteur (36) est de longueur réglable et/ou,
- le levier (61) est de longueur réglable et/ou,
- la deuxième surface d'appui (69) est réglable et/ou,
- la butée (70) est réglable.

12. Machine de coupe selon l'une quelconque des revendications 6 à 11, ***caractérisée en ce* que**, dans une position autre que celle de dépose, le levier (61) est escamoté.

13. Machine de coupe selon la revendication 12, ***caractérisée en ce* que**, dans la position autre que celle de dépose, le levier (61) est escamoté de manière que son axe longitudinal (61a) soit sensiblement confondu avec l'axe longitudinal (39a) du limiteur (36).

14. Machine de coupe selon l'une quelconque des revendications 1 à 11, ***caractérisée en ce* que** la structure d'attelage (4) comporte deux points d'attelage inférieurs (11, 12) et que, en position de dépose, le point d'attelage inférieur (11) le plus éloigné du mécanisme de coupe (3) est situé plus bas que le point d'attelage inférieur (12) le plus proche dudit mécanisme de coupe (3).

## Claims

1. Cutting machine including:
- a cutting mechanism (3);
- a hitch structure (4) intended to be connected to the hitch device (9) of a motor vehicle (10);
- a carrying beam (5) connected on the one hand to the hitch structure (4) by means of a first articulation (14) and on the other hand to the cutting mechanism (3) by means of a second articulation (17);
- a lightening device (6) including an elastically deformable element (18) connected on the one hand to the hitch structure (4) by means of a third articulation (21) and on the other hand to the cutting mechanism (3) by means of a fourth articulation (23);
- a locking device (7) intended in the transport position:
• to lock the pivoting of the hitch structure (4) with respect to the carrying beam (5) about the longitudinal axis (14a) of the first articulation (14),
• to lock the pivoting of the cutting mechanism (3) with respect to the carrying beam (5) about the longitudinal axis (17a) of the second articulation (17),
***characterized in* that**, in the set-down position, the hitch structure (4) and the carrying beam (5) are held in position by means of the elastically deformable element (18) of the lightening device (6) and **in that** the locking device (7) blocks, at least in one direction:
• the pivoting of the hitch structure (4) with respect to the carrying beam (5) about the longitudinal axis (14a) of the first articulation (14), and
• the pivoting of the carrying beam (5) with respect to the cutting mechanism (3) about the longitudinal axis (17a) of the second articulation (17).

2. Cutting machine according to Claim 1, ***characterized in* that** the locking device (7) includes a limiter (36) intended to limit the pivoting of the hitch structure (4) with respect to the carrying beam (5) about the longitudinal axis (14a) of the first articulation (14).

3. Cutting machine according to Claim 2, ***characterized in* that** the said limiter (36) is connected, at one of its ends (40, 41), to the hitch structure (4) by means of a seventh articulation (42) and, at the other of its ends (40, 41), to the carrying beam (5) in a sliding manner by means of a connection (43) including a journal (51) of longitudinal axis (51a) at least substantially parallel to the longitudinal axis (14a) of the first articulation (14), which journal (51) is guided in at least one oblong hole (57, 58) lying at least substantially near the middle part (60) of the said carrying beam (5).

4. Cutting machine according to Claim 3, ***characterized in* that** there are provided two oblong holes (57, 58) in which the ends (55, 56) of the journal (51) are guided, and **in that** the longitudinal axis (57a, 58a) of each oblong hole (57, 58) extends at least substantially at right angles to the longitudinal axis (14a) of the first articulation (14).

5. Cutting machine according to Claim 3 or 4, ***characterized in* that** the locking device (7) includes a latch (37) intended simultaneously to lock the pivoting of the hitch structure (4) with respect to the carrying beam (5) about the longitudinal axis (14a) of the first articulation (14) and the pivoting of the carrying beam (5) with respect to the cutting mechanism (3) about the longitudinal axis (17a) of the second articulation (17).

6. Cutting machine according to Claim 5, ***characterized in* that** the latch (37) includes a lever (61) connected, at one of its ends (62, 63), to the limiter (36) by means of an eighth articulation (64) of longitudinal axis (64a) coincident with the longitudinal axis (51a) of the journal (51).

7. Cutting machine according to Claim 6, ***characterized in* that** the lever (61) includes a first bearing surface (68) at its other end (63) and a second bearing surface (69) situated between this first bearing surface (68) and the eighth articulation (64).

8. Cutting machine according to Claim 7, ***characterized in* that**, in the set-down position, the first bearing surface (68) of the lever (61) bears on the cutting mechanism (3).

9. Cutting machine according to Claim 7 or 8, ***characterized in* that**, in the set-down position, the second bearing surface (69) of the lever (61) bears against a stop (70) provided on the carrying beam (5).

10. Cutting machine according to Claim 9, ***characterized in* that** the said stop (70) provided on the carrying beam (5) is situated between the two oblong holes (57, 58) in which the journal (51) is guided.

11. Cutting machine according to Claim 10, ***characterized in* that**:
- the limiter (36) is of adjustable length and/or
- the lever (61) is of adjustable length and/or
- the second bearing surface (69) is adjustable and/or
- the stop (70) is adjustable.

12. Cutting machine according to any one of Claims 6 to 11, ***characterized in* that**, in a position other than the set-down position, the lever (61) is retracted.

13. Cutting machine according to Claim 12, ***characterized in* that**, in the position other than the set-down position, the lever (61) is retracted in such a way that its longitudinal axis (61a) is substantially coincident with the longitudinal axis (39a) of the limiter (36).

14. Cutting machine according to any one of Claims 1 to 11, ***characterized in* that** the hitch structure (4) includes two lower hitch points (11, 12) and **in that**, in the set-down position, the lower hitch point (11) furthest from the cutting mechanism (3) is situated lower down than the lower hitch point (12) closest to the said cutting mechanism (3).

## Patentansprüche

1. Schneidmaschine, die
- einen Schneidmechanismus (3);
- eine Kupplungskonstruktion (4) zur Verbindung mit der Kupplungsvorrichtung (9) eines Motorfahrzeugs (10);
- einen Stützträger (5), der einerseits mittels eines ersten Gelenks (14) mit der Kupplungskonstruktion (4) und andererseits mittels eines zweiten Gelenks (17) mit dem Schneidmechanismus (3) verbunden ist;
- eine Entlastungsvorrichtung (6), die ein elastisch verformbares Element (18) enthält, das einerseits mittels eines dritten Gelenks (21) mit der Kupplungskonstruktion (4) und andererseits mittels eines vierten Gelenks (23) mit dem Schneidmechanismus (3) verbunden ist;
- eine Sperrvorrichtung (7), die in Transportstellung:
• das Schwenken der Kupplungskonstruktion (4) bezüglich des Stützträgers (5) um die Längsachse (14a) des ersten Gelenks (14) sperren soll,
• das Schwenken des Schneidmechanismus (3) bezüglich des Stützträgers (5) um die Längsachse (17a) des zweiten Gelenks (17) sperren soll, umfaßt,
***dadurch gekennzeichnet,* daß** in Absetzstellung die Kupplungskonstruktion (4) und der Stützträger (5) mittels des elastisch verformbaren Elements (18) der Entlastungsvorrichtung (6) in Position gehalten werden und daß die Sperrvorrichtung (7) in zumindest einer Richtung:
• das Schwenken der Kupplungskonstruktion (4) bezüglich des Stützträgers (5) um die Längsachse (14a) des ersten Gelenks (14) und
• das Schwenken des Stützträgers (5) bezüglich des Schneidmechanismus (3) um die Längsachse (17a) des zweiten Gelenks (17)
verhindert.

2. Schneidmaschine nach Anspruch 1, ***dadurch gekennzeichnet,* daß** die Sperrvorrichtung (7) einen Begrenzer (36) enthält, der das Schwenken der Kupplungskonstruktion (4) bezüglich des Stützträgers (5) um die Längsachse (14a) des ersten Gelenks (14) begrenzen soll.

3. Schneidmaschine nach Anspruch 2, ***dadurch gekennzeichnet,* daß** der Begrenzer (36) mit einem seiner Enden (40, 41) mittels eines siebten Gelenks (42) mit der Kupplungskonstruktion (4) und mit dem anderen seiner Enden (40, 41) mittels einer Verbindung (43), die einen Zapfen (51) mit zumindest im wesentlichen parallel zur Längsachse (14a) des ersten Gelenks (14) verlaufender Längsachse (51a) umfaßt, verschiebbar mit dem Stützträger (5) verbunden ist, wobei der Zapfen (51) in mindestens einem zumindest im wesentlichen in der Nähe des mittleren Teils (60) des Stützträgers (5) angeordneten Langloch (57, 58) geführt wird.

4. Schneidmaschine nach Anspruch 3, ***dadurch gekennzeichnet,* daß** zwei Langlöcher (57, 58) vorgesehen sind, in denen die Enden (55, 56) des Zapfens (51) geführt werden, und daß die Längsachse (57a, 58a) jedes Langlochs (57, 58) zumindest im wesentlichen senkrecht zur Längsachse (14a) des ersten Gelenks (14) verläuft.

5. Schneidmaschine nach Anspruch 3 oder 4, ***dadurch gekennzeichnet,* daß** die Sperrvorrichtung (7) einen Riegel (37) zur gleichzeitigen Sperrung des Schwenkens der Kupplungskonstruktion (4) bezüglich des Stützträgers (5) um die Längsachse (14a) des ersten Gelenks (14) und des Schwenkens des Stützträgers (5) bezüglich des Schneidmechanismus (3) um die Längsachse (17a) des zweiten Gelenks (17) enthält.

6. Schneidmaschine nach Anspruch 5, ***dadurch gekennzeichnet,* daß** der Riegel (37) einen Hebel (61) aufweist, der mit einem seiner Enden (62, 63) mittels eines achten Gelenks (64) mit einer mit der Längsachse (51a) des Zapfens (51) zusammenfallenden Längsachse (64a) mit dem Begrenzer (36) verbunden ist.

7. Schneidmaschine nach Anspruch 6, ***dadurch gekennzeichnet,* daß** der Hebel (61) eine erste Anlagefläche (68) an seinem anderen Ende (63) sowie eine zweite Anlagefläche (69) aufweist, die sich zwischen dieser ersten Anlagefläche (68) und dem achten Gelenk (64) befindet.

8. Schneidmaschine nach Anspruch 7, ***dadurch gekennzeichnet*, daß** in Absetzstellung die erste Anlagefläche (68) des Hebels (61) am Schneidmechanismus (3) anliegt.

9. Schneidmaschine nach Anspruch 7 oder 8, ***dadurch gekennzeichnet,* daß** in Absetzstellung die zweite Anlagefläche (69) des Hebels (61) an einem am Stützträger (5) vorgesehenen Anschlag (70) anliegt.

10. Schneidmaschine nach Anspruch 9, ***dadurch gekennzeichnet,* daß** sich der am Stützträger (5) vorgesehene Anschlag (70) zwischen den beiden Langlöchern (57, 58), in denen der Zapfen (51) geführt wird, befindet.

11. Schneidmaschine nach Anspruch 10, ***dadurch gekennzeichnet,* daß**
- der Begrenzer (36) eine einstellbare Länge aufweist und/oder
- der Hebel (61) eine einstellbare Länge aufweist und/oder
- die zweite Anlagefläche (69) einstellbar ist und/oder
- der Anschlag (70) einstellbar ist.

12. Schneidmaschine nach irgend einem der Ansprüche 6 bis 11, ***dadurch gekennzeichnet,* daß** in einer anderen Stellung als der Absetzstellung der Hebel (61) zurückgeklappt ist.

13. Schneidmaschine nach Anspruch 12, ***dadurch gekennzeichnet,* daß** in der anderen Stellung als der Absetzstellung der Hebel (61) so zurückgeklappt ist, daß seine Längsachse (61a) im wesentlichen mit der Längsachse (39a) des Begrenzers (36) zusammenfällt.

14. Schneidmaschine nach irgend einem der Ansprüche 1 bis 11, ***dadurch gekennzeichnet,* daß** die Kupplungskonstruktion (4) zwei untere Kupplungspunkte (11, 12) aufweist und daß sich in Absetzstellung der am weitesten vom Schneidmechanismus (3) entfernte untere Kupplungspunkt (11) weiter unten befindet als der dem Schneidmechanismus (3) am nächsten gelegene untere Kupplungspunkt (12).
